(19) Europäisches Patentamt
European Patent Office
Office européen des brevets

(11) **EP 3 095 168 B1**

(12) **EUROPÄISCHE PATENTSCHRIFT**

(45) Veröffentlichungstag und Bekanntmachung des Hinweises auf die Patenterteilung:
**16.10.2019 Patentblatt 2019/42**

(21) Anmeldenummer: **14815699.5**

(22) Anmeldetag: **18.12.2014**

(51) Int Cl.:
*H02J 3/38* (2006.01)          *H02P 23/00* (2016.01)
*F03D 7/02* (2006.01)          *F03D 7/04* (2006.01)

(86) Internationale Anmeldenummer:
**PCT/EP2014/078351**

(87) Internationale Veröffentlichungsnummer:
**WO 2015/106918 (23.07.2015 Gazette 2015/29)**

(54) **VERFAHREN UND REGEL- UND/ODER STEUEREINRICHTUNG ZUM BETRIEB EINER WINDENERGIEANLAGE UND/ODER EINES WINDPARKS SOWIE WINDENERGIEANLAGE UND WINDPARK**

METHOD AND CONTROL DEVICE FOR OPERATING A WIND POWER PLANT AND/OR PARK AND WIND POWER PLANT AND WIND PARK

MÉTHODE DE REGLAGE ET/OU CONTROLE POUR L'EXPLOITATION D'UNE CENTRALE ÉOLIENNE ET/OU D'UN PARC D'ÉOLIENNES ET CENTRALE ÉOLIENNE ET PARC D'ÉOLIENNES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.01.2014 DE 102014200737**

(43) Veröffentlichungstag der Anmeldung:
**23.11.2016 Patentblatt 2016/47**

(73) Patentinhaber: **Wobben Properties GmbH**
**26607 Aurich (DE)**

(72) Erfinder: **BUSKER, Kai**
**26629 Großefehn (DE)**

(74) Vertreter: **Eisenführ Speiser**
**Patentanwälte Rechtsanwälte PartGmbB**
**Anna-Louisa-Karsch-Strasse 2**
**10178 Berlin (DE)**

(56) Entgegenhaltungen:
• **Jiann-Shiou Yang ET AL: "Chapter 9 - Design Methods" In: "Control System Fundamentals", 16. Dezember 2010 (2010-12-16), CRC Press, XP055179456, ISBN: 978-1-42-007362-1 Seiten 9-1, DOI: 10.1201/b10383-13, Abschnitte 9.5.3.2, 9.5.4.1-9.5.4.7**

**Beschreibung**

Die vorliegende Erfindung betrifft ein Verfahren zum Betrieb einer Windenergieanlage und/oder eines Windparks und eine Regel- und/oder Steuereinrichtung zum Betrieb einer Windenergieanlage und/oder eines Windparks. Weiterhin betrifft die vorliegende Erfindung eine Windenergieanlage und einen Windpark.

Allgemein kann eine Windenergieanlage und/oder ein Windpark als ein Windenergieerzeuger d.h. eine Energieerzeugeranlage, zur Erzeugung von Energie aus Windenergie definiert werden, der insbesondere zum Einspeisen elektrischer Leistung in ein elektrisches Versorgungsnetz ausgebildet ist.

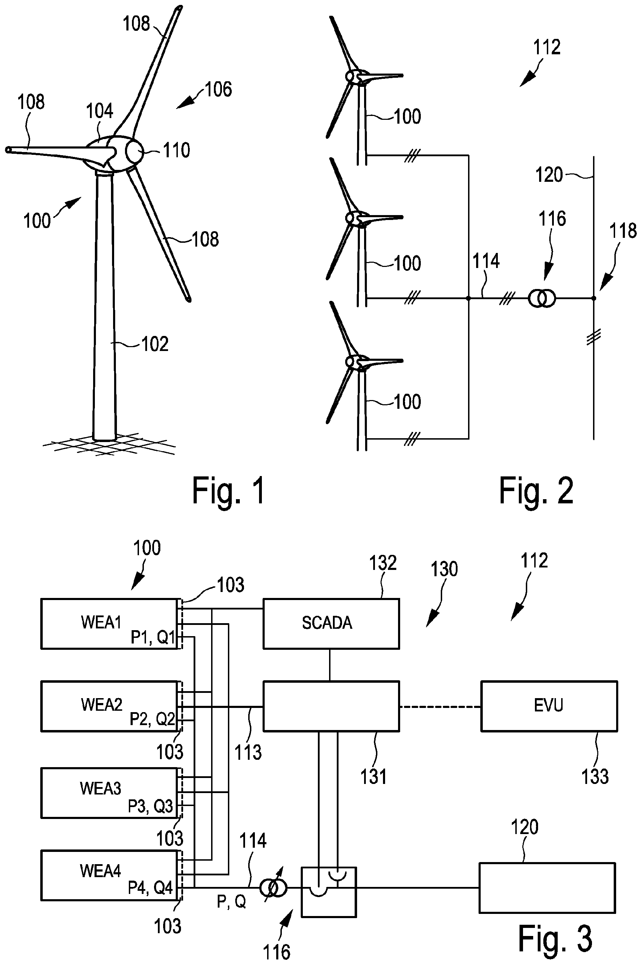

Es ist bekannt, mittels Windenergieanlagen elektrische Leistung zu erzeugen und in ein elektrisches Versorgungsnetz einzuspeisen. Eine entsprechende Windenergieanlage, also ein einzelner Windenergieerzeuger, ist schematisch in Fig. 1 gezeigt. Zunehmend werden statt Einzelanlagen zu betreiben, auch mehrere Windenergieanlagen in einem Windpark aufgestellt, der eine entsprechend große Leistung in das Versorgungsnetz einspeisen kann. Ein solcher Windpark ist schematisch in Fig. 2 gezeigt und er zeichnet sich insbesondere durch einen gemeinsamen Netzverknüpfungspunkt aus, über den alle Windenergieanlagen des Windparks in das elektrische Versorgungsnetz einspeisen. Gleichwohl kann der Windpark --dann als Mischpark bezeichnet-- auch einzelne Windenergieanlagen mit jeweils separatem Netzverknüpfungspunkt umfassen; ein Mischpark kann auch eine Anzahl von Windparks und eine Anzahl von Windenergieeinzelanlagen umfassen.

Windparks können im Vergleich zu Windenergieeinzelanlagen nicht nur vergleichsweise hohe Leistung in das elektrische Versorgungsnetz einspeisen, sondern sie weisen grundsätzlich ein entsprechend großes Regelungspotential zum Stabilisieren des elektrischen Versorgungsnetzes auf. Insoweit schlägt z. B. die US-Anmeldung US 7,638,893 vor, dass bspw. der Betreiber des elektrischen Versorgungsnetzes dem Windpark eine Leistungsvorgabe geben kann, um die einzuspeisende Parkleistung zu reduzieren, um dadurch eine weitere Steuerungsmöglichkeit für sein Versorgungsnetz zu haben. Solche Regelungseingriffe können dabei, je nach Größe des Windparks, schwach sein. Sie können zudem aufgrund der Tatsache schwierig zu handhaben sein, dass Windenergieanlagen und auch Windparks dezentrale Erzeugungseinheiten sind, weil sie vergleichsweise großflächig über ein Gebiet verteilt sind, indem das jeweilige elektrische Versorgungsnetz betrieben wird. In "Control System Fundamentals" von Jiann-Shiou Yang et al. wird die Problematik der Regelung auch angegangen, z.B. im Kontext der Sättigung von PI- oder PID-Reglern. Es wird eine Übersicht der klassischen Ansätze offenbart.

Weiterhin gibt es in manchen Ländern, wie bspw. in Deutschland, Bestrebungen, herkömmliche Großkraftwerke, insbesondere Kernkraftwerke, durch regenerative Energieerzeuger, wie Windenergieanlagen zu ersetzen. Dabei stellt sich aber das Problem, dass mit dem Abschalten und "vom Netz nehmen" eines Großkraftwerks auch dessen netzstabilisierende Wirkung verloren geht. Die verbleibenden bzw. neu hinzukommenden Energieerzeugungseinheiten werden somit benötigt, diese Änderung der Stabilität zumindest zu berücksichtigen. Problematisch ist, dass selbst bei einer in das Netz einspeisenden Windenergieeinzelanlage, beziehungsweise bei einem in das Netz einspeisenden Windpark, die Reaktionszeit zum Aufbau einer netzstabilisierenden Wirkung gegebenenfalls zu langsam ist. Dies ist grundsätzlich eine Herausforderung, da eine Windenergieanlage oder ein Windpark ein vom aktuellen Windangebot abhängiger Windenergieerzeuger ist, also Leistungserzeuger ist. Wenn darüberhinaus nur eine begrenzte Möglichkeit gegeben ist, zügig auf aktuelle Windgegebenheiten zu reagieren, erschwert oder verhindert dies die Ausübung netzstabilisierender Wirkungen.

Wünschenswert ist ein vor diesem Hintergrund netzstabilisierender Umgang mit einer Abgabeleistung in das elektrische Versorgungsnetz. Wünschenswert ist es, wenigstens eines der genannten Probleme zu adressieren und insbesondere soll eine Lösung geschaffen werden, mittels der ein Windpark eine Stützung eines elektrischen Versorgungsnetzes verbessert werden kann; dies kann genutzt werden, um ein möglichst stabiles Versorgungsnetz zu schaffen. Zumindest soll eine alternative Lösung zu bisherigen Ansätzen in diesem Bereich vorgeschlagen werden.

Das Deutsche Patent- und Markenamt hat in der Prioritätsanmeldung folgenden Stand der Technik recherchiert: DE 10 2005 032 693 A1 und BOHN, C.; ATHERTON, D.P.: An analysis package comparing PID anti-windup strategies. IEEE Control Systems , Vol. 15, Nr..2, S. 34-40, April 1995, doi: 10.1109/37.375281.

Aufgabe der Erfindung ist es, eine Vorrichtung und ein Verfahren anzugeben, mittels der eine Abgabeleistung einer Windenergieanlage und/oder eines Windparks in verbesserter Weise geregelt werden kann. Insbesondere ist es Aufgabe der Erfindung, eine Vorrichtung und ein Verfahren derart weiterzubilden, dass die Abgabeleistung zum einen in verlässlicher Weise vergleichsweise genau geregelt werden kann, gleichwohl aber mit verbesserter Reaktionszeit auf akute Windverhältnisse erfolgt; dies insbesondere, um darüber hinaus in verbesserter Weise eine netzstabilisierende Wirkung zu erreichen, jedenfalls aber die dazu sinnvollen Funktionsabläufe einer Windenergieanlage nicht oder nur unwesentlich einzuschränken.

Die Aufgabe hinsichtlich des Verfahrens wird erfindungsgemäß mit einem Verfahren gemäß Anspruch 1 gelöst. Das Konzept der Erfindung führt auch auf eine Regel- und Steuervorrichtung gemäß dem Anspruch 10.

Die Aufgabe hinsichtlich der Vorrichtung wird erfindungsgemäß mit einer Windenergieanlage gemäß Anspruch 12 und einem Windpark gemäß Anspruch 13 gelöst.

Die Erfindung geht aus von einem Konzept zum Betrieb einer Windenergieanlage und/oder eines Windparks, wobei eine Abgabeleistung mittels wenigstens einem Leistungsregelmodul einer Regel- und/oder Steuereinrichtung geregelt wird, aufweisend die Schritte:

-    Vorgeben eines Leistungsregeleingangswertes,

-    Bestimmen eines Leistungsregelausgangswertes aus dem Leistungsregeleingangswert,

-    Ausgeben eines Leistungsregelausgangswertes.

Erfindungsgemäß ist vorgesehen, dass das Leistungsregelmodul einen P-Regler und einen I-Regler sowie einen I-Anteilbegrenzer aufweist.
Erfindungsgemäß sieht das Konzept dazu weiter vor, dass

-    ein erster Arbeitswert des Leistungsregeleingangswertes im P-Regler zu einem P-Anteil verarbeitet wird,

-    ein zweiter Arbeitswert des Leistungsregeleingangswertes im I-Regler zu einem I-Anteil verarbeitet wird, und

-    ein dritter Arbeitswert des Leistungsregeleingangswertes im I-Anteilbegrenzer zu einem begrenzten I-Anteil verarbeitet wird, und

-    der Leistungsregelausgangswert mit dem begrenzten I-Anteil und dem P-Anteil bestimmt wird.

Insbesondere wird vorliegend davon ausgegangen, dass eine Windenergieanlage eine Regelstrecke darstellt, die ein vergleichsweise träges Verhalten hat und insofern auch einem eher langsamen Regelansatz zugänglich ist. Die Erfindung geht weiter von der Überlegung aus, dass sich unter bestimmten stark veränderlichen Umgebungsbedingungen bei einer Windenergieanlage wie z. B. böigen Winden oder dergleichen, insbesondere aus Gründen der Netzstabilisierung, die Notwendigkeit ergeben kann, dass die Windenergieanlage vergleichsweise schnell abgeriegelt werden sollte; dies soll grundsätzlich auch für solche Fälle gelten, in denen die Windenergieanlage vergleichsweise schnell hochgeregelt werden sollte. Andererseits hat die Erfindung erkannt, dass ein I-Anteil eines I-Reglers im Leistungsregelmodul zwar vergleichsweise genau, jedoch gegebenenfalls zu langsam arbeiten könnte. Ausgehend von dieser Erkenntnis sieht die Erfindung vor, dass ein I-Anteilbegrenzer dazu ausgebildet ist, den I-Anteil zu begrenzen. Danach wird der begrenzte I-Anteil und der P-Anteil eines Arbeitswertes eines Leistungs-Regeleingangswertes der Bestimmung des Leistungsregelausgangswertes zugeführt.
Vorteilhafte Weiterbildungen der Erfindung sind den Unteransprüchen zu entnehmen und geben im Einzelnen vorteilhafte Möglichkeiten an, das Konzept der Erfindung im Rahmen der Weiterbildungen und unter Angabe weiterer Vorteile zu realisieren.
Insbesondere hat eine Weiterbildung erkannt, dass eine sprunghafte Absenkung des I-Anteils erfolgen kann, bis zu einem Bereich eines I-Anteils, der unter einem Reservewert liegt. Der Reservewert soll ein I-Anteil sein, der für eine Reserve einer Abgabeleistung maßgeblich ist. Dabei soll insbesondere die Differenz zwischen einem Maximalwert des I-Anteils und dem Reservewert des I-Anteils so groß sein, dass die Windenergieanlage noch genügend Potential zur sprunghaften Erhöhung eines Leistungsregelausgangswertes hat. Mit anderen Worten hat die Erfindung erkannt, dass eine sehr sprunghafte Änderung des I-Anteils, insbesondere eine Senkung oder auch ggfs. eine Erhöhung des I-Anteils, unter Begrenzung des I-Anteils erfolgen kann. Die Begrenzung kann in einem Maß erfolgen, das von einer Windenergieanlage unter netzstabilisierenden Vorgaben ohnehin nicht erbracht werden soll oder könnte.
Insbesondere hat eine Weiterbildung erkannt, dass eine I-Anteilbegrenzung vorteilhaft derart erfolgt, dass der I-Anteil auf einen höchst möglichen Wert für die Windenergieanlage sprunghaft abgesenkt wird, d.h. auf einen Wert für die Windenergieanlage sprunghaft abgesenkt wird, der maximal möglich ist.
Insbesondere hat eine Weiterbildung erkannt, dass zur Steuerung eines Windparks der I-Anteil auf denjenigen höchsten Wert derjenigen Windenergieanlage geändert werden kann, die den aktuellen höchsten Wert des I-Anteils aufweist. Dies führt dazu, dass der I-Anteil nicht schneller steigt oder fällt als das, was eine Windenergieanlage aktuell oder generell zu leisten in der Lage ist.
Einerseits wird dadurch verhindert, dass der I-Anteil zu weit reduziert wird und dadurch die Leistung zu stark einbricht. Andererseits wird verhindert, dass der I-Anteil zu weit erhöht wird und dadurch die Leistung zu stark steigt. Ohne einen solchen begrenzenden I-Anteil würde bei einer schnellen Änderung der Windparkleistung der tatsächliche Leistungsregelausgangswert für einen vergleichsweise langen Zeitraum nachgeregelt werden oder ggfs. nachschwingen. Eine solche vergleichsweise langsame Reaktion eines an sich vorteilhaften PI-Anteils --d. h. eine Kombination eines I-Anteils und eines P-Anteils in einem Regelmodul mittels einer Parallel- oder Reihenschaltung des I-Anteils (eines I-Reglers) und eines P-Anteils (eines P-Reglers)-- kann insofern zeitlich verkürzt werden.

Hinsichtlich des Aufbaus einer Regel- und Steuereinrichtung weist diese bevorzugt ein Leistungsregelmodul auf, mit einem P-Regler und mit einem I-Regler und darüberhinaus mit einem I-Anteil-Begrenzer. Bevorzugt wird der P-Anteil des P-Reglers parallel zum I-Anteil des I-Reglers bestimmt; d.h. P-Regler und I-Regler parallel geschaltet.

Bevorzugt wird der I-Anteil aus dem Leistungs-Regeleingangswert bestimmt und der begrenzte I-Anteil danach aus dem I-Anteil bestimmt. Insbesondere ist im Leistungsregelmodul der I-Regler und I-Anteil-Begrenzer parallel zum P-Regler und der I-Anteil-Begrenzer in Reihe nach dem I-Regler gekoppelt.

Im Rahmen einer besonders bevorzugten Weiterbildung wird der begrenzte I-Anteil mittels einer Steigungsbegrenzung und/oder Amplitudenbegrenzung des I-Anteils bestimmt. Bevorzugt ist die Verstärkung eines Reglers, insbesondere die Verstärkung des P-Reglers und/oder die Verstärkung des I-Reglers und/oder die Verstärkung des I-Anteil-Begrenzers auf maximal 20% beschränkt.

Bevorzugt umfasst das Betriebsverfahren im Rahmen der Regelung zunächst wenigstens einen der Schritte: Parametrisieren des Leistungsregelmoduls, und/oder Messen von Netzparametern und danach Vorgeben des Leistungs-Regeleingangswertes. Für vorteilhafte Details einer Parametrisierung und/oder Messung von Netzparametern wird auf die nachfolgende Beschreibung der Zeichnung verwiesen.

Bevorzugt wird der Leistungs-Regeleingangswert abhängig von der Netzfrequenz vorgegeben; d.h. als eine Funktion der Netzfrequenz. Insbesondere wird eine Wirkleistung und/oder Blindleistung der Abgabeleistung geregelt. Im Rahmen einer besonders bevorzugten Weiterbildung der Erfindung ist vorgesehen, dass der Leistungsregelausgangswert einer Wirkleistung entspricht. Die Wirkleistung der Abgabeleistung wird wenigstens nach einer Netzfrequenz des elektrischen Versorgungsnetzes geregelt.

Weitere Einzelheiten und Vorteile der Erfindung sind in den Ausführungsbeispielen gemäß der Zeichnung offenbart. Ausführungsbeispiele der Erfindung werden nun nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematisierter und/oder leicht verzerrter Form ausgeführt. Im Hinblick auf Ergänzungen der aus der Zeichnung unmittelbar erkennbaren Lehren wird auf den einschlägigen Stand der Technik verwiesen.

Weitere Vorteile, Merkmale und Einzelheiten der Erfindung ergeben sich aus der nachfolgenden Beschreibung der bevorzugten Ausführungsbeispiele sowie anhand der Zeichnung; diese zeigt in:

Fig. 1    schematisch eine Windenergieanlage;
Fig. 2    schematisch einen Windpark;
Fig. 3    schematisch eine Windparksteuerung in Verbindung mit einem Windpark, z. B. der Fig. 2;
Fig. 4    einen prinzipiellen Aufbau einer internen Vorgabewert-Bestimmung für einen Sollwert (hier eine Wirkleistungssollwert P-SOLL für eine Wirkleistung im Rahmen einer Wirkleistungsregelung);
Fig. 5    einen generellen Aufbau eines Reglers mit einem Regelmodul, das parametrisierbar besonders bevorzugt als Abgabeleistungsregelmodul (insbesondere Wirkleistungsregelmodul oder Blindleistungsregelmodul) genutzt werden kann, insbesondere nach einer internen VorgabewertBestimmung gemäß Fig. 4;
Fig. 6    das Prinzip einer Wirkleistungsregelung der Fig. 5 mit einem Wirkleistungsregelmodul in einer besonders bevorzugten Ausführungsform gemäß dem Konzept der Erfindung;
Fig. 7    den Verlauf einer Ist-Leistung im Vergleich zu einer Soll-Leistung;
Fig. 8    den in abfallender Sprungfunktion dargestellten Verlauf einer Soll-Wirkleistung P-Soll.

Fig. 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

Fig. 2 zeigt einen Windpark 112 mit beispielhaft drei Windenergieanlagen 100, die gleich oder verschieden sein können. Die drei Windenergieanlagen 100 stehen somit repräsentativ für im Grunde eine beliebige Anzahl von Windenergieanlagen eines Windparks 112. Die Windenergieanlagen 100 stellen ihre Leistung, nämlich insbesondere den erzeugten Strom über ein elektrisches Windparknetz 114 bereit. Dabei werden die jeweils erzeugten Ströme bzw. Leistungen der einzelnen Windenergieanlagen 100 aufaddiert und meist ist ein Transformator 116 vorgesehen, der die Spannung im Park hochtransformiert, um dann an dem Netzverknüpfungspunkt 118, der auch allgemein als PoC bezeichnet wird, in das Versorgungsnetz 120 einzuspeisen. Fig. 2 ist nur eine vereinfachte Darstellung eines Windparks 112, die beispielsweise keine Steuerung zeigt, obwohl natürlich eine Steuerung vorhanden ist. Auch kann beispielsweise das Windparknetz 114 anders gestaltet sein, in dem beispielsweise auch ein Transformator am Ausgang jeder Windenergieanlage 100 vorhanden ist, um nur ein anderes Ausführungsbeispiel zu nennen.

Fig. 3 zeigt eine Übersicht über ein Windparksteuerungssystem 130 bei einem schematischen Aufbau des Windparks 112 mit einer Anzahl von Windenergieanlagen WEA. Die Windparksteuerung 131 ist eine übergeordnete Windpark-Steuer- und Regeleinheit. Bezugspunkt dieser Steuerung und/oder Regelung ist ein projektspezifisch definierter Referenzpunkt. Üblicherweise ist dieser identisch mit dem Netzverknüpfungspunkt 118 des Windparks 112 am Mittel- bzw. Hochspannungsnetz; also dem Versorgungsnetz 120. Üblicherweise ist der Netzverknüpfungspunkt 118 ein Umspannwerk oder eine Übergabestation. Eine jede der Windenergieanlagen WEAi (hier i=1..4) gibt Wirk- und Blindleistung Pi, Qi (hier i=1..4) ab, die in das Windparknetz 114 abgegeben werden und als gesamte Wirk- und Blindleistung P, Q über den Transformator 116 an den Netzverknüpfungspunkt 118 zur Abgabe an das elektrische Versorgungsnetz abgegeben wird.

Die Windparksteuerung 131 hat am Netzverknüpfungspunkt 118 die Möglichkeit zur Spannungs- und Strommessung.

Vorliegend ist ein Windparksteuerungssystem 130 gebildet aus einer zentralen Einheit (Hardware und Software) einer Windparksteuerung 131 am Netzverknüpfungspunkt 118 und einer SCADA-Windparksteuerung 132, die auch mit einem Kontrollraum 133 des Netzbetreibers steuerverbunden sind. Die Datenkommunikation zu den Windenergieanlagen WEAi erfolgt über einen eigenen Datenbus, den Windparksteuerungs-Bus. Dieser ist parallel zum Scada-Bus aufgebaut. Die Windparksteuerung 131 fordert zyklisch Informationen der einzelnen Windenergieanlagen WEAi an und muss diese für jede der Windenergieanlagen WEAi (hier i=1..4) im Speicher vorhalten.

Es können Prioritäten zwischen der Windparksteuerung 131 und einer SCADA-Windparksteuerung 132 festgelegt werden. Die Windenergieanlage 100 kann ohne übergeordnete Steuerung oder Regelung an einem Netzverknüpfungspunkt 118 einspeisen. Allerdings haben sich zwei übergeordnete Windpark-Steuerungen und/oder -Regelungen 131, 132 bewährt. Daher gibt es verschiedene Kombinationen für die Einspeisung. Die Einstellungen für die unterschiedlichen Funktionen werden an einer Steuerplatine der Windenergieanlage 100 mittels einer Eingabevorrichtung wie z.B. einem Touchpanel oder einem PC vorgenommen. Ist keine der übergeordneten Windparksteuerung und/oder Regelung aktiviert (z.B. Windparksteuerung 131 oder SCADA-Windparksteuerung 132), werden die fest in der Steuerplatine festgelegten Vorgaben verwendet. Soll eine Windparksteuerung und/oder Regelung verwendet werden, muss dieses über die Parameter an der Steuerplatine als Einstellung aktiviert werden. Aus diesen Einstellungen ergeben sich vier verschiedene Kombinationen:

- Keine Parkregelung

- Windparksteuerung (und/oder Regelung) 131

- SCADA-Windparksteuerung (und/oder Regelung) 132

- Windparksteuerung (und/oder Regelung) 131 und SCADA-Windparksteuerung (und/oder Regelung) 132

Die übergeordneten Steuerungen/Regler können auf wenigstens drei verschiedene wesentliche Größen Einfluss nehmen:

- Maximale Wirkleistung der Anlage (Pmax),

- die Blindleistung, dazu zählen auch Steuerungen wie die von "Q zu P";

- und die Frequenzvorhalteleistung, (dies bei aktivierter Frequenzregelung).

In jeder Windenergieanlage 100 wird eine Empfängereinheit, die hier als Windenergieanlagen-Schnittstelle 103 bezeichnet ist, installiert. Die Windenergieanlagen-Schnittstelle 103 ist die Schnittstelle der Windparksteuerung 131 in der Windenergieanlage WEAi. Als Empfangsschnittstelle in jeder der Windenergieanlagen WEAi dient eine Platine der Windenergieanlagen-Schnittstelle 103. Sie empfängt die von der Windparksteuerung 131 vorgegebenen Sollwerte, wandelt sie um, und gibt die Informationen weiter an die Windenergieanlagen WEAi. Diese Windenergieanlagen-Schnittstelle 103 nimmt die Stellgrößen der Windparksteuerung 131 auf und leitet diese an die Windenergieanlage WEAi weiter. Des Weiteren übernimmt sie die Überwachung der Datenkommunikation des Windparksteuerung-Bus 113 und organisiert den Vorgabemodus bei einem gestörten Datenbus oder beim Ausfall der Windparksteuerung 131.

Die Windparksteuerung 131 misst am Netzverknüpfungspunkt 118 die Spannung U und den Strom I. Eine Steuerplatine mit analogen Eingängen und Mikroprozessoren in der Windparksteuerung analysiert das Netz und berechnet die entsprechenden Spannungen, Ströme und Leistungen.

Die Windparksteuerung 131 stellt einen gewissen Arbeitsbereich zur Verfügung, der mit relevanten Hardwaretechnischen Windpark- bzw. Hardware- Parametern eingestellt werden kann. Einige der Einstellungen betreffen beispielsweise Angaben zur Nennspannung und/oder zum Nennstrom auf der Niederspannungsebene, der Mittelspannungsebene und/oder Hochspannungsebene, die Angabe einer Parknennwirkleistung, die Angabe einer Parknennblindleistung, die Angabe der Netzfrequenz, die Angabe der Anzahl von Windenergieanlagen im Park, sowie diverse Einstellungen von Sonderfunktionen, Sollwertvorgaben und Angaben zur Datenkommunikation bzw. Steuerung.

Weiterhin können folgende Parameter festgelegt werden, wie: Filterzeitkonstanten, Regler-Reset-Optionen, Netzfehler Unterspannung/Überspannung, Vorgabewert-Rampen; auch können die Grenzen definiert werden, die einmal als Vorgabewert zugelassen werden oder beispielsweise Mindest- und Maximalleistungen einer Windenergieanlage, sowie Begrenzungen von Ausgangswerten für eine Blindleistung, Wirkleistung Phasenwinkel, als auch Begrenzungswerte für maximale oder minimale Sollwertvorgaben betreffend Spannung, Wirk- und Blindleistung, Phasenwinkel als auch Begrenzungswerte für Sollwertvorgaben von externer Seite.

Auch können alle Standardvorgabeeinstellungen der Windparksteuerung 131 vorgenommen werden; es gibt für jeden Vorgabewert einen Standardvorgabewert.

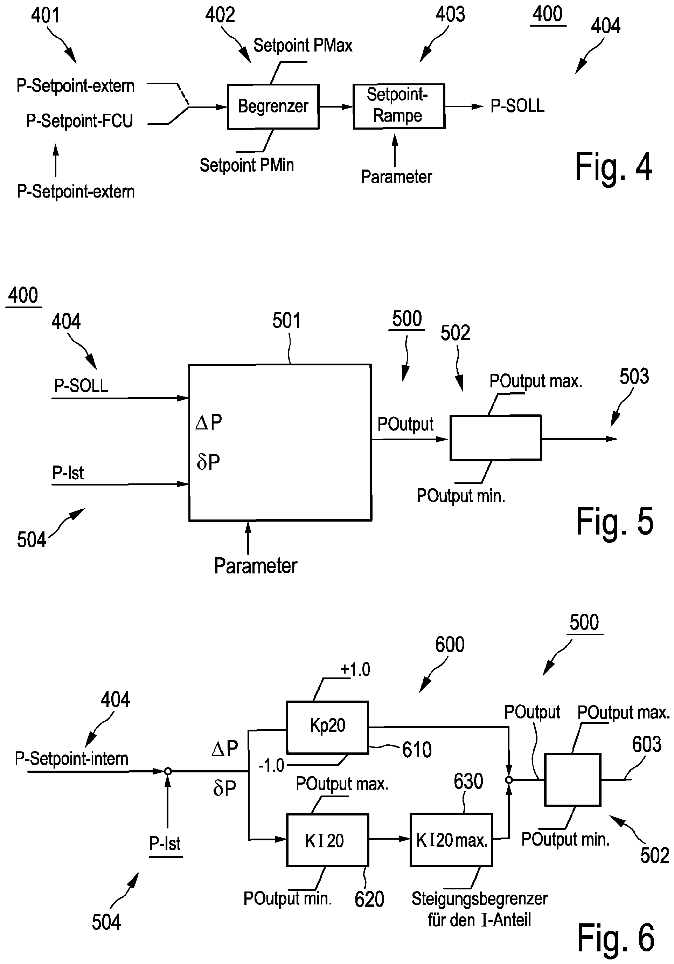

Regler sind in zwei grundsätzliche Teile strukturiert, wobei jeder beispielsweise einen generellen Regleraufbau der Fig. 5 und bevorzugt gemäß Fig. 6 haben kann:

1. Regelung und/oder Steuerung zur Wirkleistung: Wirkleistungsregler, Leistungsgradientenregler, Leistungsfrequenzregler, Leistungssteuerung, und weitere.

2. Regelung und/oder Steuerung zur Blindleistung: Spannungsregler, Blindleistungs-Regler, Phasenwinkel-Regler, Sonderregler, Blindleistungssteuerung.

Die Windparksteuerung 131 ist so aufgebaut, dass verschiedene Reglertypen ausgewählt werden können, insbesondere für verschiedene Grundtypen für die Wirkleistung:

Typ 1: Kein Wirkleistungsregler (nur Vorgabe einer Maximal- und/oder Reserveleistung)

Typ 2: Wirkleistungssteuerung (direkte Vorgabe einer Maximal- und/oder Reserveleistung)

Typ 3: Wirkleistungsregler ohne Frequenzabhängigkeit von der Netzfrequenz (ohne P(f) - Funktionalität)

Typ 4: Wirkleistungsregler mit Frequenzabhängigkeit von der Netzfrequenz (mit P(f) - Funktionalität)

Bei der Auswahl eines Reglers mit einer Windparksteuerung-P(f)-Funktion wird die Anlagenfrequenzregelung zum Teil deaktiviert. Die Kontrolle liegt in dem Moment bei der Windparksteuerung 131. Bevorzugt ist eine Parametrierung der Windparksteuerung als P(f)-Regler; d.h. die Abgabeleistung, insbesondere Wirkleistung und/oder Blindleistung, ist eine Funktion der Netzfrequenz des elektrischen Versorgungsnetzes 120. Bei der Verwendung einer Windparksteuerung-P(f)-Funktion ist auf die richtige Parametrierung und Vorgabe der Vorgabewerte zu achten. Dazu kann ein Regler mit entsprechender P(f)-Charakteristik ausgewählt und parameterisiert sein; die einzelnen Windparksteuerungs-Regler haben somit unterschiedliche Funktionalitäten. Die Windparksollleistung und eine die externe Schnittstelle zu übertragen. Das Zusammenspiel zwischen dem Windpark-Leistungswert und der P(f)-Funktion ist in den einzelnen Windparksteuerungs-Reglern festgelegt. Weiter sollte eine Windparksteuerungs-P(f)-Regelung nur aktiv sein, wenn der entsprechende Regler ausgewählt ist und die Windparksteuerung eine aktive und intakte Datenkommunikation zu den Anlagen ausbilden kann. Beispielsweise ist in Fig. 5 und Fig. 6 ein bevorzugter Aufbau eines Leistungsreglers, insbesondere Wirkleistungsreglers, gezeigt.

Allgemein werden Regler nach stetigem und unstetigem Verhalten unterschieden. Zu den bekanntesten stetigen Reglern gehören die "Standardregler" mit P-, PI-, PD- und PID-Verhalten. Ferner gibt es unter den stetigen Reglern verschiedene Sonderformen mit angepasstem Verhalten, um schwierige Regelstrecken regeln zu können. Dazu gehören beispielsweise Regelstrecken mit Totzeiten, mit nichtlinearem Verhalten, mit Drift der Streckenparameter und bekannten und unbekannten Störgrößen. Viele nicht stabile Regelstrecken, die zum Beispiel durch positive Rückkopplungseffekte (Mitkopplung) entstehen können, sind ebenfalls mit klassischen linearen Reglern beherrschbar. Stetige Regler mit analogem oder digitalem Verhalten können für lineare Regelstrecken verwendet werden. Digitale Regler haben den Vorteil einer universellen Anpassung an die unterschiedlichsten Regelaufgaben, jedoch verlangsamen sie den Regelprozess durch die Abtastzeit der Regelgröße und Rechenzeit im Einsatz bei schnellen Regelstrecken.

Ein an sich bekannter stetiger linearer Regler ist der P-Regler (zur Bestimmung eines P-Anteils), dessen Sprungantwort im P-Anteil mit Kp bezeichnet wird. Der P-Regler besteht ausschließlich aus einem proportionalen Anteil der Verstärkung Kp. Mit seinem Ausgangssignal u ist er proportional dem Eingangssignal e. Das Übergangsverhalten lautet:

$$u(t) = K_p * e(t). \text{ Die Übertragungsfunktion lautet: } U/E(s) = K_p$$

Der P-Regler hat also eine gewählte Verstärkung von Kp (in Fig. 6 ist die Verstärkung mit 20% angegeben/begrenzt und der P-Anteil entsprechend mit Kp20 bezeichnet). Wegen des fehlenden Zeitverhaltens reagiert der P-Regler unmittelbar, jedoch ist sein Einsatz begrenzt, weil die Verstärkung je nach Verhalten der Regelstrecke reduziert werden muss. Außerdem bleibt ein Regelfehler einer Sprungantwort nach dem Einschwingen der Regelgröße als "bleibende Regelabweichung" bestehen, wenn kein I-Glied in der Strecke enthalten ist.

Ein an sich bekannter Regler ist der I-Regler (zur Bestimmung eines I-Anteils) dessen Sprungantwort im I-Anteil mit KI bezeichnet wird. Ein I-Regler (integrierender Regler, I-Glied) wirkt durch zeitliche Integration der Regelabweichung e(t) auf die Stellgröße mit der Gewichtung durch die Nachstellzeit T_N. Die Integralgleichung dazu lautet: u(t)=1/T_N INT(0..t) e(t')dt'. Die Übertragungsfunktion lautet: U/E(s)=1/(T_N* s) = KI/s. Die Verstärkung ist KI=1/T_N.

Eine konstante Regeldifferenz e(t) führt von einem Anfangswert des Ausgangs u1(t) zum linearen Anstieg des Ausgangs u2(t) bis zu seiner Begrenzung. Die Nachstellzeit T_N bestimmt den Gradienten des Anstiegs. Also z.B. u(t) = KI * e(t) * t, für e(t) = konstant. Die Nachstellzeit zum Beispiel T_N = 2 s bedeutet, dass zur Zeit t = 0 der Ausgangswert u(t) nach 2 s die Größe des konstanten Eingangswertes e(t) erreicht hat. Der I-Regler ist ein langsamer und genauer Regler; durch seine (theoretisch) unendliche Verstärkung. Er hinterlässt keine bleibende Regelabweichung. Jedoch kann nur eine schwache Verstärkung KI bzw. eine große Zeitkonstante T_N eingestellt werden (in Fig. 6 ist die Verstärkung mit 20% angegeben/begrenzt und der I-Anteil entsprechend mit KI20 bezeichnet)

Bekannt ist der sogenannte Wind-up-Effekt bei Großsignalverhalten. Wenn beim I-Regler die Stellgröße durch die Regelstrecke begrenzt wird, tritt ein sogenannter Wind-up-Effekt auf. Dabei arbeitet die Integration des Reglers weiter, ohne dass die Stellgröße zunimmt. Wird die Regelabweichung kleiner, entsteht beim Rücklauf eine ungewollte Verzögerung der Stellgröße und damit der Regelgröße. Dem kann man mit der Begrenzung der Integration auf die Stellgrößen-Grenzen entgegentreten (Anti-wind-up). Als eine mögliche Anti-Wind-Up-Maßnahme wird der I-Anteil bei Erreichen der Eingangsgrößenbeschränkung auf dem letzten Wert eingefroren (z. B. durch Absperrung des I-Gliedes). Wie bei jedem Begrenzungseffekt innerhalb eines dynamischen Systems verhält sich der Regler dann nichtlinear. Das Verhalten des Regelkreises ist durch numerische Berechnung zu prüfen.

Im Rahmen eines PI-Reglers (proportional-integral-controller) gibt es Anteile des P-Gliedes KP und des I-Gliedes mit der Zeitkonstante T_N. Er kann sowohl aus einer Parallelstruktur oder aus einer Reihenstruktur definiert werden. Der Begriff der Nachstellzeit T_N stammt aus der Parallelstruktur des Reglers. Die Integralgleichung des PI-Reglers in der Parallelstruktur:

$$u(t)=K\_P \ [e(t)+1/T\_N \ INT \ (0..t) \ e(t') \ dt']$$

Die Übertragungsfunktion der Parallelstruktur lautet:

$$U/E(s)=K\_P+K\_P/(T\_N* s) = K\_P \ (1 + 1/T\_N* s)$$

Wird der Klammerausdruck der Gleichung auf einen gemeinsamen Nenner gebracht, entsteht die Produktdarstellung in der Reihenstruktur: U/E(s)=K_P * (T_N* s+1)/ (T_N * s)

KPI = KP / T_N ist die Verstärkung des PI-Reglers. Aus dieser Produktdarstellung der Übertragungsfunktion ist ersichtlich, dass zwei Regelsysteme als Einzelsysteme zu einer Reihenstruktur geworden sind. Es handelt sich hierbei um ein P-Glied und um ein I-Glied mit der Verstärkung KPI, welche sich aus den Beiwerten KP und T_N errechnen. Signaltechnisch wirkt der PI-Regler gegenüber dem I-Regler so, dass nach einem Eingangssprung dessen Wirkung um die Nachstellzeit T_N vorverlegt ist. Durch den I-Anteil wird die stationäre Genauigkeit gewährleistet, die Regelabweichung wird nach dem Einschwingen der Regelgröße zu Null. So ergibt sich keine Regelabweichung bei konstantem Sollwert: Durch das I-Glied wird im stationären Zustand bei konstantem Sollwert die Regelabweichung zu Null. Bei einem PI-Glied ohne Differenzierung entsteht bei der Realisierung des Reglers in der Parallelstruktur keine parasitäre Verzögerung. Wegen eines möglichen Wind-up-Effektes durch Regelstreckenbegrenzung der Stellgröße u(t) ist die schaltungsmäßige Realisierung des PI-Reglers in der Parallelstruktur anzustreben. Der PI-Regler ist ein langsamer Regler, da der durch das I-Glied erworbene Vorteil der Vermeidung einer stationären Regelabweichung auch den Nachteil hat, dass eine zusätzliche Polstelle mit -90 ° Phasenwinkel in den offenen Regelkreis eingefügt wird, was eine Reduzierung der Kreisverstärkung KPI bedeutet. Deshalb ist der PI-Regler kein schneller Regler.

Grundlage einer Windparksteuerung 131 ist, wie aus Fig. 3 ersichtlich, die Netzmessung, vorzugsweise unter Einstellung von Filterzeitkonstanten. Die Windparksteuerung 131 misst am Netzverknüpfungspunkt 118 drei Netzspannungen (gegen den Neutralleiter bzw. dem Erdpotenzial) und drei Phasenströme. Daraus wird ein Raumzeiger gebildet und entsprechend der Netzqualität gefiltert. Dieses Filter kann mit einer Filterzeitkonstante und einer Reihe von Parametern eingestellt werden.

Die grundsätzliche Reglerstruktur kann auf sogenannte Module zurückgreifen, von denen eines --allgemein in Fig. 5 und gemäß dem Konzept der Erfindung in Fig. 6-- für das Beispiel eines Wirkleistungsreglers gezeigt ist. Eine Anzahl verketteter solcher oder anderer Module hintereinander kann dann die für das jeweilige Projekt benötigte Funktion bilden. Sogenannte Vorgabewerte 404 (auch "Setpoints") sind bevorzugt Sollwerte für die Regler. Die Windparksteuerung 131 bietet für alle relevanten Sollwerte einen Wert an, so z. B. einen Spannungssollwert, einen Blindleistungssollwert, einen Phasenwinkel(Phi)-sollwert, einen Wirkleistungssollwert, einen Leistungsvorhaltesollwert, insbesondere netzfrequenzabhängig (P(f) - Funktion).

Für jeden Sollwert werden in der Windparksteuerung 131 Grenzen (Min-Max-Werte) festgelegt. Die Vorgabe solcher Sollwerte können direkt an der Windparksteuerung 131 vorgegeben oder über eine externe Schnittstelle übertragen werden. Zur Vorgabe 400 von Vorgabewerten 404 mittels einer Sollwertvorgabe werden erst einige Stufen durchlaufen, bis der Wert als Eingangsgröße am eigentlichen Regelmodul 501 des Reglers 500 zur Verfügung steht. An einer Sollwertgenerierung 401 wird ein vorläufiger Sollwert generiert, entweder direkt an der Windparksteuerung 131 oder über eine externe Sollwertschnittstelle. Dieser vorläufige Sollwert durchläuft eine Begrenzung 402 mit einem Maximalwert und Minimalwert (hier für eine Wirkleistung mit einem Pmax- und Pmin-Wert). Diese sind als Parameter in der Windparksteuerung 131 hinterlegt. Der daraus resultierende Sollwert durchläuft eine sogenannte Sollwertrampe 403. Die Sollwertrampe soll schlagartige Sollwertänderungen verhindern. Parameter sind in der Windparksteuerung 131 fest vorgegebene Einstellungen bzw. Werte, die nur an der Steuerung selbst eingestellt werden können. Diese werden dann auf der Steuerung gespeichert. Sie dienen als Betriebsparameter und definieren somit das Verhalten der Windparksteuerung 131 und somit des Reglers.

Anschließend bekommen die Windenergieanlagen 100 das gleiche Stellsignal (POutput) aus dem Regelmodul 501 gemäß Vorgabe der Soll-Abgabeleistung 503. Dadurch werden bei einer Leistungsreduzierung in 502 zuerst diejenigen Anlagen begrenzt, die auch gerade mehr Leistung produzieren.

Der grundsätzliche Regleraufbau 500 ist selbst bei Verwendung eines funktionsspezifisch abgewandelten bzw. ergänzten Regelmoduls im Vergleich zu dem der Fig. 5 grundsätzlich gleich. Die Eingangsgröße (hier P-Soll (entweder direkt an der Windparksteuerung 131 eingegeben oder durch die externe Schnittstelle vorgegeben) kann --im Rahmen einer Vorgabewertbestimmung 400 wie in Fig. 4 erläutert-- auf die Parknennleistung (P-nominal) normiert werden. Danach werden die eingestellten Grenzen des Vorgabewerts in der Begrenzung 402 überprüft (diese sind als Parameter in der Windparksteuerung 131 hinterlegt Pmin, Pmax). Dieser Sollwert wird bei einer Sollwertänderung nicht sofort übernommen, sondern mit einer entsprechenden Sollwertrampe (sogenannte "Setpoint-Ramp") 403 verändert. Die Rampensteilheit ist wiederum ein Parameter in der Windparksteuerung 131. Der resultierende Wert dient dann wie erläutert als Vorgabewert 404 für den eigentlichen Regler 500 mit Regelmodul 501; hier für das Beispiel der Wirkleistung. Die zurückgemessene Leistung (Plst) am Netzverknüpfungspunkt 118 dient als Ist-Größe für das Regelmodul 501. Diese Größe kann je nach Parametrierung gefiltert werden. Die Ist-Leistung 504 kann auch auf Windparknennleistung (P-nominal) normiert werden. Das Regelmodul 501 des Reglers 500 für Wirkleistung gemäß Fig. 5 (oder z. B. ganz analog für Blindleistung) ist ein eigenständiges Modul, welches von verschiedenen Reglern aufgerufen werden kann oder bei anderen Reglern als vereinfachtes Modul verwendet werden kann.

Genauer ist jeder Wirkleistungsregler oder eine Wirkleistungssteuerung 400, 500 nach dem Schema der Fig. 4, Fig. 5 aufgebaut. Im nachfolgenden wird eine Regelung und Steuerung, die für das Verhalten der Wirkleistung am Netzverknüpfungspunkt 118 zuständig ist --beispielhaft für ein Vielzahl derselben mit ggfs. unterschiedlicher Netzfrequenzabhängiger Funktionalität-- beschrieben. Diese Regler/Steuerungen beeinflussen z. B. die Stellgrößen Pmax und P(reserved) der Windenergieanlagen. Dabei werden bevorzugt alle Windenergieanlagen gleich behandelt. Es wird dabei nicht unterschieden, ob eine Windenergieanlage gerade 40% ihrer Nennleistung ausbringen kann oder 80% ihrer Leistung. Alle Anlagen bekommen dann das gleiche Stellsignal aus dem Regelmodul 501. Dadurch werden, wie oben erläutert, bei einer Leistungsreduzierung auch in 502 immer zuerst die Anlagen begrenzt, die auch gerade mehr Leistung produzieren.

Fig. 6 zeigt zur Weiterbildung des Regelmoduls 501 einen Wirkleistungsregler mit einem Regler 600 bei dem der Parameter "KI20max" die Steigung des I-Anteils begrenzt. Dieses gilt bei steigendem und auch bei fallendem I-Anteil. Das zugrunde liegende Konzept sieht vor, dass der I-Anteil nicht schneller steigen oder fallen soll, als das was die Windenergieanlage liefern kann.

Zum Beispiel kann eine E82-Windenergieanlage der Anmelderin 2MW als normalen Leistungsgradienten bei Reduzierung der Wirkleistung einen Gradienten von 120kW/s haben. Dies entspricht 0,060 pu/s; dieser Leistungsgradient dP/dt ist ein Parameter der Windenergieanlage. Bei Verwendung einer Windparksteuerungs-Leistungsregelung sind die Windenergieanlagen-Parameter mit der Windparksteuerung 131 vorteilhaft abgestimmt. Wenn zum Beispiel eine Windenergieanlage einen Sollwertsprung vorgegeben bekommt, läuft intern die Begrenzung durch den genannten Gradienten. Diese Begrenzung sollte durch den "KI20max"-Parameter nachempfunden werden. Damit soll verhindert werden, dass der I-Anteil zu weit reduziert wird und dadurch die Leistung zu stark einbricht. Ohne diesen begrenzenden I-Anteil würde die Leistung zu stark einbrechen bei einer starken und sprunghaften Reduzierung der Sollwindparkleistung.

Die Wirkung der I-Anteilbegrenzung lässt sich mit anderen Worten wie folgt zusammenfassen: Vor dem Hintergrund, dass eine Windenergieanlage 100 bzw. ein Windpark 112 regelmäßig als vergleichsweises träges System einer Regelstrecke anzusehen ist, erweist sich die Reaktion eines Reglers bei sich ändernden Ist- oder Soll-Wertvorgaben als vergleichsweise schnell. Dies führt dazu, dass bereits bei kleiner Differenz zwischen P-Soll und P-Ist --hier mit δP bezeichnet-- der I-Anteil des Reglers 500 oder 600, nämlich KI, eine angemessene Verstärkung aufweist. Ist jedoch beispielsweise im Falle von Windböen oder dgl. ein Differenz zwischen P-Soll und P-Ist relativ groß --wie hier mit ΔP bezeichnet-- würde der I-Anteil KI beim Regler 500 unverhältnismäßig groß ausfallen, und einen maximalen Wert des I-Anteils Imax überschreiten. Nämlich einen maximalen Wert des I-Anteils Imax überschreiten der jenseits des tatsächlich trägen Verhaltens einer Leistungssteigerung bei einer Windenergieanlage liegt. Letztere Leistungssteigerung des tatsächlich trägen Verhaltens ist beispielsweise bei maximal 6% oder 20% zu suchen.

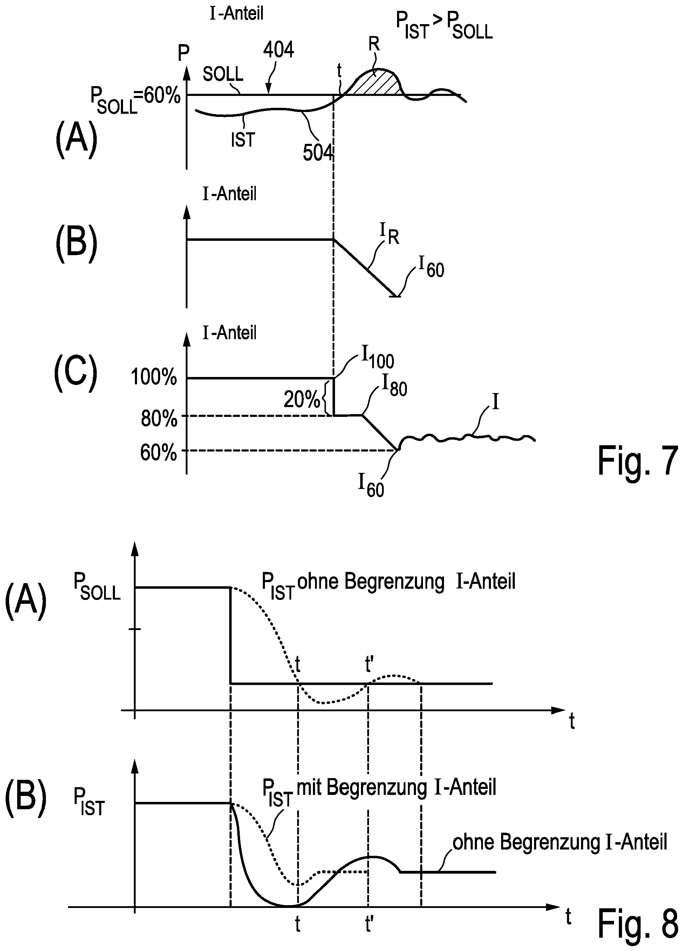

Übersteigt also ΔP einen Relativwert von dieser Größenordnung, wie beispielsweise 6% oder 20%, so sorgt der als Steigungsbegrenzer für den I-Anteil ausgeführte I-Anteilbegrenzer KI20max im Regler 600 für eine Begrenzung des I-Anteils auf maximal 20%. Die Zusammenwirkung von P-Regler 610 mit Verstärkung KP20, I-Regler mit Verstärkung KI20 und I-Anteilbegrenzer 630 mit maximalem steigungsbegrenzten I-Anteil von 20% KI20max führt zu einem bevorzugten und verbessertem Regelungsverhalten für den Leistungsregelausgangswert POutput beim Regler 600. In dem zuvor erläuterten Begrenzer 502 wird zudem POutput max und POutput min gehalten und dann als Stellgröße POutput WEA an die Windenergieanlage WEA gegeben. Im Einzelnen ist das nach dem oben erläuterten Prinzip bevorzugte Verhalten des Reglers 600 im Vergleich zu einem allgemeinen Verhalten des Reglers 500 bei einer Sollwertvorgabe für eine Wirkleistung P-Soll anhand von Fig. 7 und Fig. 8 erläutert.

Fig. 7 zeigt zunächst in Ansicht (A) den Verlauf einer Ist-Leistung 504 im Vergleich zu einer Soll-Leistung 404. Daraus resultiert in diesem Beispiel ein ΔP=P-Soll-P-Ist, das bei dem in Ansicht (A) gezeigten Verlauf der Fig. 7 ab dem Zeitpunkt t eine viel zu starke Reaktion R (Überschwinger) der Windenergieanlage für die Ist-Leistung P-Ist hervorruft, die schraffiert dargestellt ist. Ursache ist die reglerbedingte Senkung des I-Anteils ab dem Zeitpunkt t von einem Wert I100 auf einen darunterliegenden Wert I60 durch eine langsame Rampe IR, die in Ansicht (B) dargestellt ist. Der Verlauf eines I-Anteils im Rahmen der Rampe IR zwischen einem Maximalwert I100 und einem Reservewert I80, ist jedoch, wie in Ansicht (C) verdeutlicht, in Anbetracht der tatsächlichen Leistungsfähigkeit der Windenergieanlage unangemessen. Denn wenigstens bis zu dem Reservewert von I80 als 80% des maximalen I-Anteils I100 bzw. im Bereich zwischen I80 und I100 soll die Windenergieanlage aus Netzstabilisierungsgründen unter Vorbehaltung einer Reserve nicht im Nennbetrieb betrieben werden - eben aus dem Grund, dass der Bereich zwischen I80 und I100 aus Netzstabilisierungsgründen als Reserve zur Verfügung stehen soll. Die in Ansicht (C) dargestellte Begrenzung des I-Anteils gemäß dem Konzept der Erfindung, hier auf I80, führt dazu, dass ein Bereich zwischen I100 und I80 als Stufenfunktion eingestellt wird und ein unter I80 liegender Bereich als Rampe abfallen kann. Anders ausgedrückt, sind 20% des I-Anteils aufgrund ihres sofortigen Abbaus der schnel-len Reaktion der Windenergieanlage im Falle einer bevorzugten Abregelung zuträglich. Nach Erreichen des Zielwertes des I-Anteils I60 kann der I-Anteil I wieder durch normales Regelverhalten einstellbar gestaltet sein.

Dies wird anhand der im Vergleich dargestellten Verläufe der Abgabeleistung P-Ist deutlich. Fig. 8 zeigt in Ansicht (A) den in abfallender Sprungfunktion dargestellten Verlauf einer Soll-Wirkleistung P-Soll. Diese führt für den Fall, dass der I-Anteil des Wirkleistungsregelmoduls 600 ohne Steigungsbegrenzung ausgeführt wäre --d. h. nur mit I-Regler 620-- dazu, dass die Leistung P-Ist, (ohne I-Anteil-Begrenzung) vergleichsweise lange nachgeregelt wird. Wie in Ansicht (B) dargestellt kann dies insbesondere zu einem unerwünschten Schwingungsverhalten führen, bei dem die Ist-Leistung P-Ist unterhalb der Soll-Leistung P-Soll liegt. Dies ist beispielsweise zwischen den Zeitpunkten t und t' der Fall.

In Ansicht (B) der Fig. 8 dagegen ist dieses Nachschwingen der Ist-Abgabeleistung P-Ist für die Wirkleistung aus Ansicht (A) einem Verlauf der Abgabeleistung P-Ist gegenübergestellt, bei welcher der I-Anteil des Wirkleistungsregelmoduls 600 begrenzt ist, d.h. unter Beteiligung des P-Reglers 610, des I-Reglers 620 und des I-Anteils-Begrenzers 630. In diesem Fall ist die Vorgabe der Soll-Leistung als abfallende Sprungfunktion die gleiche. Ohne die I-Anteilbegrenzung würde die Ist-Leistung P-Ist vergleichsweise lange nachschwingen. Im Falle einer I-Anteilbegrenzung mittels dem I-Anteilbegrenzer 630 kann jedoch erreicht werden, dass die Abgabeleistung P-Ist gemäß Ansicht (B) der Fig. 8 ähnlich eines aperiodischen Grenzfalls ohne wesentliches Nachschwingen, noch vor dem Zeitpunkt t', auf die Sollwertvorgabe P-Soll abgesenkt wird. Dies wird erreicht durch die sprunghafte Begrenzung des I-Anteils I100 auf einen Reservewert I80; zusätzlich erfolgt erst danach eine weitere Absenkung des I-Anteils im Rahmen einer Rampe auf den vorgesehenen Wert I60. Danach wird der I-Anteil wieder freigegeben und kann im üblichen trägen Betrieb der Windenergieanlage den Ist- und Soll-Wert-Vorgaben der Wirkleistung folgen, wie dies in Ansicht (C) der Fig. 7 dargestellt ist.

**Patentansprüche**

1. Verfahren zum Betrieb einer Windenergieanlage (100) und/oder eines Windparks (112) zum Einspeisen elektrischer Leistung in ein elektrisches Versorgungsnetz (120), wobei eine Abgabeleistung, insbesondere eine Wirk- und/oder Blindleistung (P, Q), mittels wenigstens einem Leistungsregelmodul (501) einer Regel- und/oder Steuereinrichtung (131) geregelt wird, aufweisend die Schritte:

- Vorgeben eines Leistungs-Regeleingangswertes
- Bestimmen eines Leistungs-Regelausgangswertes aus dem Leistungs-Regeleingangswert
- Ausgeben eines Leistungs-Regelausgangswertes, wobei
- das Leistungsregelmodul einen P-Regler (610) und einen I-Regler (620) aufweist und einen I-Anteil-Begrenzer aufweist, wobei
- ein erster Arbeitswert des Leistungs-Regeleingangswertes im P-Regler (610) zu einem P-Anteil verarbeitet wird,
- ein zweiter Arbeitswert des Leistungs-Regeleingangswerts im I-Regler (620) zu einem I-Anteil verarbeitet wird, und
- ein dritter Arbeitswert des Leistungs-Regeleingangswerts im I-Anteil-Begrenzer (630) zu einem begrenzten I-Anteil verarbeitet wird,
- der P-Anteil parallel zum I-Anteil bestimmt wird, und
- der I-Anteil aus dem Leistungs-Regeleingangswert bestimmt wird und der begrenzte I-Anteil danach aus dem I-Anteil bestimmt wird, **gekennzeichnet dadurch, dass**:

  - der begrenzte I-Anteil mittels einer Steigungsbegrenzung begrenzt wird und die Begrenzung des I-Anteils des I-Reglers auf maximal 20% beschränkt ist, und

  - der Leistungs-Regelausgangswert (P-Output) mit dem begrenzten I-Anteil und dem P-Anteil bestimmt wird.

2. Verfahren nach Anspruch 1, **dadurch gekennzeichnet, dass** der begrenzte I-Anteil mittels einer Amplitudenbegrenzung des I-Anteils bestimmt wird.

3. Verfahren nach Anspruch 1 oder 2, **dadurch gekennzeichnet, dass** die Verstärkung des P-Reglers (610) und/oder die Verstärkung des I-Reglers (620) und/oder die Verstärkung des I-Anteil-Begrenzers (630) auf maximal 20% beschränkt ist.

4. Verfahren nach einem der vorhergehenden Ansprüche, **dadurch gekennzeichnet, dass** für die Begrenzung des I-Anteils der I-Anteil auf einen Wert für die Windenergieanlage sprunghaft absenkt wird, der maximal möglich ist.

5. Verfahren nach Anspruch 4, **dadurch gekennzeichnet, dass** für die Begrenzung des I-Anteils der I-Anteil in einem Bereich als Stufenfunktion eingestellt wird und in einem darunter liegenden Bereich als Rampe abfallen kann.

6. Verfahren nach einem der vorhergehenden Ansprüche, **dadurch gekennzeichnet, dass** die Begrenzung des P-Anteils des P-Reglers auf maximal 20% beschränkt ist.

7. Verfahren nach einem der vorhergehenden Ansprüche, **gekennzeichnet durch** die weiteren Schritte:

   - Parametrisieren des Leistungsregelmoduls, und/oder
   - Messen von Netzparametern und danach
   - Vorgeben des Leistungs-Regeleingangswertes.

8. Verfahren nach einem der vorhergehenden Ansprüche, **dadurch gekennzeichnet, dass** der Leistungs-Regeleingangswert abhängig von der Netzfrequenz vorgegeben wird.

9. Verfahren nach einem der vorhergehenden Ansprüche, **dadurch gekennzeichnet, dass** eine Wirkleistung und/oder Blindleistung (P, Q) der Abgabeleistung geregelt wird.

10. Regel- und/oder Steuereinrichtung ausgebildet zum Betrieb einer Windenergieanlage (100) und/oder eines Windparks (112) zum Einspeisen elektrischer Leistung in ein elektrisches Versorgungsnetz (120) gemäß einem Verfahren nach einem der Ansprüche 1 bis 9, mit wenigstens einem Leistungsregelmodul, aufweisend einen P-Regler (610) und einen I-Regler (620) und einen I-Anteil-Begrenzer (630), der I-Regler und I-Anteil-Begrenzer parallel zum P-Regler und der I-Anteil-Begrenzer in Reihe nach dem I-Regler gekoppelt ist, **gekennzeichnet dadurch, dass** der begrenzte I-Anteil mittels einer Steigungsbegrenzung begrenzt ist und die Begrenzung des I-Anteils des I-Reglers auf maximal 20% beschränkt ist.

**11.** Regel- und/oder Steuereinrichtung nach Anspruch 10, **dadurch gekennzeichnet, dass** der I-Anteil-Begrenzer (630) zur Begrenzung des I-Anteils ausgebildet ist, den I-Anteil auf einen Wert für die Windenergieanlage sprunghaft abzusenken, der maximal möglich ist, insbesondere der I-Anteil in einem Bereich als Stufenfunktion eingestellt ist und in einem darunter liegenden Bereich als Rampe abfallen kann.

**12.** Windenergieanlage (100) zum Einspeisen elektrischer Leistung in ein elektrisches Versorgungsnetz mit einer Regel- und/oder Steuereinrichtung nach Anspruch 10 oder 11.

**13.** Windpark (112) zum Einspeisen elektrischer Leistung in ein elektrisches Versorgungsnetz mit einer Anzahl von Windenergieanlagen nach Anspruch 12.

**14.** Windpark (112) nach Anspruch 13, **dadurch gekennzeichnet, dass** alle Windenergieanlagen des Windparks in gleicher Weise geregelt werden.

**Claims**

**1.** Method for operating a wind turbine (100) and/or a wind park (112) for feeding electrical power into an electrical supply network (120), wherein an output power, in particular an active and/or reactive power (P, Q), is controlled by means of at least one power control module (501) of a regulation and/or control device (131), having the steps of:

- predetermining a power control input value,
- determining a power control output value from the power control input value,
- outputting a power control output value, wherein
- the power control module has a P controller (610) and an I controller (620) and an I proportion limiter, wherein
- a first working value of the power control input value in the P controller (610) is processed to form a P proportion,
- a second working value of the power control input value in the I controller (620) is processed to form an I proportion, and
- a third working value of the power control input value is processed in the I proportion limiter (630) to form a limited I proportion,
- the P proportion is determined parallel with the I proportion, and
- the I proportion is determined from the power control input value and the limited I proportion is subsequently determined from the I proportion, **characterised in that**:

- the limited I proportion is limited by means of a gradient limitation and the limitation of the I proportion of the I controller is limited to a maximum of 20%, and
- the power control output value (P output) is determined with the limited I proportion and the P proportion.

**2.** Method according to claim 1, **characterised in that** the limited I proportion is determined by means of an amplitude limitation of the I proportion.

**3.** Method according to claim 1 or 2, **characterised in that** the amplification of the P controller (610) and/or the amplification of the I controller (620) and/or the amplification of the I proportion limiter (630) is/are limited to a maximum of 20%.

**4.** Method according to any one of the preceding claims, **characterised in that**, for the limitation of the I proportion, the I proportion is abruptly lowered to a value which is the maximum possible value for the wind turbine.

**5.** Method according to claim 4, **characterised in that** for the limitation of the I proportion, the I proportion is adjusted in a range as a step function and can decrease in a lower range in the manner of a ramp.

**6.** Method according to any one of the preceding claims, **characterised in that** the limitation of the P proportion of the P controller is limited to a maximum of 20%.

**7.** Method according to any one of the preceding claims, **characterised by** the following steps:

- parameterisation of the power control module, and/or
- measuring network parameters and subsequently

- predetermining the power control input value.

8. Method according to any one of the preceding claims, **characterised in that** the power control input value is predetermined in accordance with the network frequency.

9. Method according to any one of the preceding claims, **characterised in that** an active power and/or reactive power (P, Q) of the output power is controlled.

10. Regulation and/or control device constructed for operating a wind turbine (100) and/or a wind park (112) for feeding electrical power into an electrical supply network (120) according to a method according to any one of claims 1 to 9, having at least one power control module, having a P controller (610) and an I controller (620) and an I proportion limiter (630), the I controller and I proportion limiter are coupled in a parallel manner with the P controller and the I proportion limiter is coupled in series after the I controller, **characterised in that** the limited I proportion is limited by means of a gradient limitation and the limitation of the I proportion of the I controller is limited to a maximum of 20%.

11. Regulation and/or control device according to claim 10, **characterised in that** the I proportion limiter (630) is constructed to limit the I proportion, to abruptly reduce the I proportion to a value which is the maximum possible value for the wind turbine, in particular the I proportion is adjusted in a range as a step function and can decrease in a lower range in the manner of a ramp.

12. Wind turbine (100) for feeding electrical power into an electrical supply network having a regulation and/or control device according to claim 10 or 11.

13. Wind park (112) for feeding electrical power into an electrical supply network having a number of wind turbines according to claim 12.

14. Wind park (112) according to claim 13, **characterised in that** all the wind turbines of the wind park are controlled in the same manner.

**Revendications**

1. Procédé servant à faire fonctionner une éolienne (100) et/ou un parc éolien (112) pour injecter de la puissance électrique dans un réseau d'alimentation (120) électrique, dans lequel une puissance de distribution, en particulier une puissance active et/ou réactive (P, Q), est régulée au moyen d'au moins un module de régulation de puissance (501) d'un dispositif de régulation et/ou de commande (131), présentant les étapes :

- de spécification d'une valeur d'entrée de régulation de puissance
- de définition d'une valeur de sortie de régulation de puissance à partir de la valeur d'entrée de régulation de puissance
- de sortie d'une valeur de sortie de régulation de puissance, dans lequel
- le module de régulation de puissance présente un régulateur P (610) et un régulateur I (620) et présente un limiteur de composante I, dans lequel
- une première valeur de fonctionnement de la valeur d'entrée de régulation de puissance est traitée dans le régulateur P (610) pour obtenir une composante P,
- une deuxième valeur de fonctionnement de la valeur d'entrée de régulation de puissance est traitée dans le régulateur I (620) pour obtenir une composante I, et
- une troisième valeur de fonctionnement de la valeur d'entrée de régulation de puissance est traitée dans le limiteur de composante I (630) pour obtenir une composante I limitée,
- la composante P est définie parallèlement à la composante I, et
- la composante I est définie à partir de la valeur d'entrée de régulation de puissance et la composante I limitée est définie par la suite à partir de la composante I, **caractérisé en ce que** :

- la composante I limitée est limitée au moyen d'une limitation de montée et la limitation de la composante I du régulateur I est limitée à un maximum de 20 %, et
- la valeur de sortie de régulation de puissance (P-Output) est définie avec la composante I limitée et la composante P.

**2.** Procédé selon la revendication 1, **caractérisé en ce que** la composante I limitée est définie au moyen d'une limitation d'amplitude de la composante I.

**3.** Procédé selon la revendication 1 ou 2, **caractérisé en ce que** l'amplification du régulateur P (610) et/ou l'amplification du régulateur I (620) et/ou l'amplification du limiteur de composante I (630) est limitée à un maximum de 20 %.

**4.** Procédé selon l'une quelconque des revendications précédentes, **caractérisé en ce que**, pour la limitation de la composante I, la composante I est réduite brusquement à une valeur pour l'éolienne qui est au maximum possible.

**5.** Procédé selon la revendication 4, **caractérisé en ce que**, pour la limitation de la composante I, la composante I est fixée dans une zone en tant que fonction étagée et peut retomber en rampe dans une zone située dessous.

**6.** Procédé selon l'une quelconque des revendications précédentes, **caractérisé en ce que** la limitation de la composante P du régulateur P est limitée à un maximum de 20 %.

**7.** Procédé selon l'une quelconque des revendications précédentes, **caractérisé par** les autres étapes :

- de configuration du module de régulation de puissance, et/ou
- de mesure de paramètres de réseau, et ensuite
- de spécification de la valeur d'entrée de régulation de puissance.

**8.** Procédé selon l'une quelconque des revendications précédentes, **caractérisé en ce que** la valeur d'entrée de régulation de puissance est spécifiée en fonction de la fréquence de réseau.

**9.** Procédé selon l'une quelconque des revendications précédentes, **caractérisé en ce qu'**une puissance active et/ou une réactive (P, Q) de la puissance de distribution sont régulées.

**10.** Dispositif de régulation et/ou de commande servant à faire fonctionner une éolienne (100) et/ou un parc éolien (112) pour injecter de la puissance électrique dans un réseau d'alimentation (120) électrique selon un procédé selon l'une quelconque des revendications 1 à 9, avec au moins un module de régulation de puissance, présentant un régulateur P (610) et un régulateur I (620) et un limiteur de composante I (630),
le régulateur I et le limiteur de composante I sont couplés de manière parallèle par rapport au régulateur P et le limiteur de composante I est couplé en série après le régulateur I, **caractérisé en ce que**
la composante I limitée est limitée au moyen d'une limitation de montée et la limitation de la composante I du régulateur I est limitée à un maximum de 20 %.

**11.** Dispositif de régulation et/ou de commande selon la revendication 10, **caractérisé en ce que** le limiteur de composante I (630) destiné à limiter la composante I est conçu pour réduire brusquement la composante I à une valeur pour l'éolienne qui est un maximum possible, en particulier la composante I est fixée dans une zone en tant que fonction étagée et peut retomber en rampe dans une zone située dessous.

**12.** Eolienne (100) servant à injecter de la puissance électrique dans un réseau d'alimentation électrique avec un dispositif de régulation et/ou de commande selon la revendication 10 ou 11.

**13.** Parc éolien (112) servant à injecter de la puissance électrique dans un réseau d'alimentation électrique avec un nombre d'éoliennes selon la revendication 12.

**14.** Parc éolien (112) selon la revendication 13, **caractérisé en ce que** toutes les éoliennes du parc éolien sont régulées de manière identique.

Fig. 1

Fig. 2

Fig. 3

401

402
Setpoint PMax

403

400
404

P-Setpoint-extern

P-Setpoint-FCU

Begrenzer

Setpoint-Rampe

P-SOLL

Setpoint PMin

Parameter

P-Setpoint-extern

## Fig. 4

400

404

501

500
502

P-SOLL

$\Delta P$

$\delta P$

POutput

POutput max.

503

P-Ist

POutput min.

504

Parameter

## Fig. 5

500

404

+1.0

600

POutput

POutput max.

P-Setpoint-intern

$\Delta P$

$\delta P$

Kp20

-1.0

610

POutput max.

630

603

KI20

KI20 max.

POutput min.

502

P-Ist

504

POutput min.

620

Steigungsbegrenzer
für den I-Anteil

## Fig. 6

I-Anteil

$P_{IST} > P_{SOLL}$

R

P

$P_{SOLL}$=60%

SOLL

404

t

(A)

IST

504

I-Anteil

(B)

$I_R$

$I_{60}$

I-Anteil

(C)

100%

$I_{100}$

$I_{80}$

I

20%

80%

60%

$I_{60}$

Fig. 7

$P_{SOLL}$

(A)

$P_{IST}$ ohne Begrenzung I-Anteil

t

t'

t

$P_{IST}$

(B)

$P_{IST}$ mit Begrenzung I-Anteil

ohne Begrenzung I-Anteil

t

t'

t

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 7638893 B

- DE 102005032693 A1

**In der Beschreibung aufgeführte Nicht-Patentliteratur**

- **JIANN-SHIOU YANG.** *Control System Fundamentals*

- **D BOHN, C. ; ATHERTON, D.P.** An analysis package comparing PID anti-windup strategies. *IEEE Control Systems,* April 1995, vol. 15 (2), 34-40